# EUROPÄISCHE PATENTANMELDUNG

(11) **EP 3 623 293 A1**
(43) Veröffentlichungstag der Anmeldung: **18.03.2020**
(21) Anmeldenummer: 19196671.2
(22) Anmeldetag: 11.09.2019
(51) Int. Cl.: B64D 17/30

(54) **ANSCHNALLHILFE FÜR FALLSCHIRMSPRINGER**

(30) Priorität: 11.09.2018 DE 102018122128
(71) Anmelder: Kirsch, Dieter, 99947 Bad Langensalza (DE)
(72) Erfinder: Kirsch, Dieter, 99947 Bad Langensalza (DE)
(74) Vertreter: Maikowski & Ninnemann Patentanwälte Partnerschaft mbB

(57) **Zusammenfassung**

Die Erfindung liegt auf dem Gebiet des Fallschirmsports und betrifft eine Anschnallhilfe (100) für Fallschirmspringer (20), die einen Beingurtverbinder (101) und ein Verbindungselement (102) aufweist, um einen Fallschirmspringer (20) in einem Flugzeug (104) während des Fluges vor dem Absprung zu sichern. Die Anschnallhilfe (100) ist beispielsweise mit dem Beingurt (13) eines Fallschirmsystems (10) verbunden oder verbindbar. Die erfindungsgemäße Anschnallhilfe (100) trägt somit zur Erhöhung der Sicherheit der Fallschirmspringer (20) während des Fluges vor dem Absprung bei.

## Beschreibung

Die Erfindung liegt auf dem Gebiet des Fallschirmsports und betrifft eine Anschnallhilfe für Fallschirmspringer, das einen Gurt und ein Verbindungselement aufweist, um einen Fallschirmspringer in einem Flugzeug während des Fluges vor dem Absprung zu sichern. Die Anschnallhilfe ist beispielsweise mit dem Beingurt eines Fallschirmsystems verbunden oder verbindbar. Die erfindungsgemäße Anschnallhilfe trägt somit zur Erhöhung der Sicherheit der Fallschirmspringer während des Fluges vor dem Absprung bei.

### Stand der Technik

Fallschirmspringer müssen sich im Flugzeug anschnallen. Dafür sind am Boden oder den Wänden des Flugzeugs Anschnallmöglichkeiten, wie beispielsweise Gurte, vorbereitet, die üblicherweise an den Beingurten des Gurtzeugs des Fallschirmsystems, das von einem Fallschirmspringer getragen wird, befestigt werden müssen. Ein Fallschirmsystem besteht aus einem Gurtzeug und einem daran vernähten Container, in dem sich die Fallschirme befinden, die wiederum mit dem Gurtzeug verbunden sind. Elemente des Gurtzeuges sind die Beingurte, die im vorderen Bereich durch die Beingurtschließe geführt werden und die am Beingurtverbinder angebracht sind.

Herkömmliche Fallschirmsysteme weisen jedoch keine vorgesehen Verbindungsstücke auf, an denen der Anschnallgurt des Flugzeugs befestigt werden kann. Das Anschnallen der voll ausgerüsteten Fallschirmspringer ist deshalb immer eine "umständliche Herausforderung". Gleiches trifft für das Abschnallen vor dem Absprung zu. Zur Veranschaulichung, Flugzeuge im Fallschirmsport weisen meistens keine Sitze für die Fallschirmspringer auf. Die Fallschirmspringer sitzen meistens auf dem Boden des Flugzeugs oder rittlings hintereinander auf Bänken, und zwar so eng hintereinander, dass die Bewegungsfreiheit der einzelnen Fallschirmspringer so stark eingeengt ist, dass das Anbringen des Anschnallgurts vom Boden oder von der Wand des Flugzeugs am Gurtzeug des Fallschirmspringers stark erschwert wird. Das Anschnallen der Fallschirmspringer ist jedoch notwendig, um ein Verrutschen der Fallschirmspringer während des Fluges, insbesondere beim Abflug oder bei plötzlichen Flugmanövern zu verhindern. Gerade, wenn sich eine große Anzahl von Fallschirmspringer in dem Flugzeug befindet, könnte das Verrutschen der Fallschirmspringer bei solchen Flugmanövern, genauso wie das verrutschen von ungesicherter Ladung in einem Transportflugzeug, zur Beeinträchtigung der Flugsicherheit, Verletzungen der Fallschirmspringer bis hin zum Absturz des Flugzeuges führen.

Es ist bekannt, Flugzeugbesatzungen mit Fallschirmgeschirren zu versehen, in denen der Fallschirm und in einigen Fällen Hilfsausrüstung, wie zum Beispiel ein Schlauchboot, durch ein System von Gurten an dem Träger befestigt sind, die eine tragende Wiege für den Träger während des Fallschirmsprungs bilden und auch einen Sicherheitsgurt, der ein weiteres Gurtsystem umfasst, durch das der Träger bei Manövern des Flugzeugs sicher an seinem Sitz gesichert ist, aufweist und der als Aufprallsicherung im Flugzeug bei Ereignissen wie einem Notfall oder einer Bruchlandung fungieren kann. Bei dieser Anordnung besteht die übliche Praxis darin, dass der Pilot beim Einnehmen des Flugzeugsitzes zuerst den Sicherheitsgurt verbindet und über die Oberseite des Fallschirmkabelbaums einstellt. Diese Vorgänge müssen in vielen Fällen durch das Bodenpersonal unterstützt werden. Die GB 794831 A beispielsweise offenbart einen solchen mit einem Fallschirmsystem kombinierten Sicherheitsgurt, wobei die Sicherung des Fallschirmspringers am Sitz des Flugzeugs über den Sicherheitsgurt am Oberkörper des Fallschirmspringers erfolgt.

Die GB 854768 A betrifft einen Flugzeug-Schleudersitz mit Bein-Rückhaltemitteln, wobei ein Gurt an der Sitzstruktur anstatt an dem Sicherheitsgurt des Flugzeugsitzes befestigt ist. Beim Auswerfen des Schleudersitzes halten die Bein-Rückhaltemittel die Beine des Piloten an dem Schleudersitz fest. Wenn der Pilot automatisch oder freiwillig den Sitz verlässt, werden die Bein-Rückhaltemittel durch einen Mechanismus freigegeben.

Die aus GB 794831 A und GB 854768 A bekannten Sicherheitsgurte bzw. Bein-Rückhaltemittel sind zur Verwendung im Fallschirmsport nicht geeignet, da die Fallschirmspringer, wie Eingangs beschrieben, nicht auf Sitzen, sondern am Boden des Flugzeugs sitzen.

### Beschreibung der Erfindung

Die Aufgabe der Erfindung bestand daher darin, die Nachteile des Standes der Technik zu überwinden. Diese Aufgabe wird gelöst durch eine Anschnallhilfe Anschnallhilfe gemäß Anspruch 1 und ein Fallschirmsystem gemäß Anspruch 6.

Die Erfindung stellt eine Anschnallhilfe für Fallschirmspringer bereit, das einen Beingurtverbinder und ein Verbindungselement aufweist. Der Beingurtverbinder besteht vorzugsweise aus einem Gurt. Unter Gurt wird erfindungsgemäß ein kräftiges bandförmiges Gewebe, das aus einem für Gurtzeuge für Fallschirmspringer üblichen Material, wie beispielsweise aus Textilfasern oder Kunststoff besteht, verstanden. Der Gurt kann auch aus Leder bestehen. Bevorzugt ist es, wenn das bandförmige Gewebe des Gurts aus Textilfasern oder Kunststofffasern oder einem Gemisch aus diesen beiden besteht. Geeignete Materialien, aus denen die Textil- oder Kunststofffasern bestehen können, sind beispielsweise Polypropylen, Polyester, Polyamid, Aramid, Baumwolle, Viskose und hochfeste Garne.

Das Verbindungselement des Beingurtverbindungsstücks besteht beispielsweise aus einem ringförmigen, ovalen, eckigen (beispielsweise drei- oder viereckigen) Metallbügel. Das Verbindungselement ist vorzugsweise als Metallring ausgebildet. In einer anderen Ausführungsform der Erfindung kann das Verbindungselement auch ein Karabiner oder Karabinerhaken sein. Das Verbindungselement ist mit dem Gurt verbunden und ermöglicht das einfache Verbinden des Beingurtverbindungsstücks, wie beispielsweise das Einhängen oder Einhaken, mit einem Anschnallgurt vom Boden oder von der Wand des Flugzeugs. Es kann auch vorgesehen sein, dass das Verbindungselement durch eine Schlaufe des Gurts selbst gebildet wird.

Es ist möglich, dass die erfindungsgemäße Anschnallhilfe bei der Herstellung eines Fallschirmsystems, wie beispielsweise eines Fallschirmrucksacks, fest mit dem Gurtzeug des Fallschirmsystems verbunden, wird. Dies erfolgt in der Regel durch vernähen. Die Anschnallhilfe kann aber auch als separates Bauteil hergestellt werden. Dadurch wird es ermöglicht, die erfindungsgemäße Anschnallhilfe an bereits vorhandenen Fallschirmsystemen nachzurüsten. Im einfachsten Fall weist die Anschnallhilfe gemäß dieser Ausführungsform der Erfindung weitere Mittel zum einfachen Befestigen an vorhandene Fallschirmsysteme auf. Dies kann beispielsweise eine Schlaufe sein, durch die das Ende des Beingurtverbindungsstücks, an dem sich das Verbindungselement befindet, gezogen wird. Alternativ kann es sich bei dem weiteren Befestigungsmittel auch um einen ringförmigen, ovalen, eckigen (beispielsweise drei- oder viereckigen) Metallbügel oder einen Karabiner handeln, durch den das Ende des Beingurtverbindungsstücks, an dem sich das Verbindungselement befindet, gezogen wird oder das an einer geeigneten Stelle des Fallschirmsystemss befestigt werden kann. Herkömmliche Fallschirmrucksäcke weisen beispielsweise einen Ringverbinder auf, der Haupttragegurt und Beingurt des Gurtzeugs miteinander verbindet. Vorzugsweise ist die erfindungsgemäße Anschnallhilfe ebenfalls an diesem Ringverbinder befestigbar.

Die Erfindung betrifft weiterhin ein Fallschirmsystem, insbesondere einen Fallschirmrucksack, an dem die erfindungsgemäße Anschnallhilfe entweder fest oder nachträglich angebracht worden ist. Die Anschnallhilfe ist vorzugsweise am Beingurt des Fallschirmsystems befestigt. Dies ermöglicht ein einfaches Verbinden mit dem Anschnallgurt vom Boden oder von der Wand des Flugzeugs. Zur Erhöhung des Komforts für Rechtshänder oder für Linkshänder kann vorgesehen sein, die Anschnallhilfe entweder an dem rechten Beingurt oder dem linken Beingurt des Fallschirmsystemss anzubringen. In einer weiteren Ausführungsform der Erfindung kann an dem Fallschirmsystem beidseitig, das heißt an dem linken und dem rechten Beingurt eine erfindungsgemäße Anschnallhilfe vorgesehen sein. Damit ist ein solches Fallschirmsystem universell sowohl für Rechtshänder als auch für Linkshänder einsetzbar. Zudem bietet ein solches Fallschirmsystem den Vorteil, dass sich der Fallschirmspringer mit dem ihm am nächsten liegenden Anschnallgurt vom Boden oder von der Wand des Flugzeugs verbinden kann, was den Anschnallvorgang stark vereinfacht.

In einer weiteren Ausführungsform der Erfindung ist es vorgesehen, dass die Anschnallhilfe verdeckt durch eine Schutzhülle an dem Fallschirmsystem angebracht ist. Beingurt und Anschnallhilfe sind größtenteils von einer Schutzhülle umgeben. Dadurch ist die Anschnallhilfe kaum sichtbar. Diese Ausführungsform hat den Vorteil, dass die Anschnallhilfe nicht frei beweglich am Fallschirmsystem hängt, wodurch ein unbeabsichtigtes Verhaken des Beingurtverbindungsstücks an Bauteilen des Flugzeugs oder anderen Fallschirmspringern beim Besteigen des Flugzeugs vermieden werden kann. Die Schutzhülle ist vorzugsweise so gestaltet, dass das Verbindungselement des Beingurtverbindungsstücks in einfacher Art und Weise aus der Schutzhülle herausgezogen werden kann, wenn eine Befestigung an dem Anschnallgurt vom Boden oder von der Wand des Flugzeugs erfolgen soll. Die Schutzhülle selbst kann aus dem Gleichen Material wie das Gurtzeug gebildet sein.

Die Erfindung betrifft weiterhin die Verwendung des erfindungsgemäßen Beingurtverbindungsstücks zur Sicherung eines Fallschirmspringers in einem Flugzeug während des Fluges vor dem Absprung.

Durch die erfindungsgemäße Anschnallhilfe wird die Aufgabe der Erfindung gelöst, nämlich das vereinfachte Anschnallen der Fallschirmspringer am Boden oder der Wand eines Flugzeugs, um ein Verrutschen der Fallschirmspringer während des Fluges, insbesondere beim Abflug oder bei plötzlichen Flugmanövern und dadurch die Beeinträchtigung der Flugsicherheit, Verletzungen der Fallschirmspringer bis hin zum Absturz des Flugzeuges zu verhindern.

Die Erfindung wird nachfolgend durch 8 Zeichnungen näher erläutert.

Es zeigen:
- Figur 1:: eine Ausführungsform der erfindungsgemäßen Anschnallhilfe als separates Bauteil;
- Figur 2:: Teile des Gurtzeugs eines Fallschirmrucksacks mit erfindungsgemäßer Anschnallhilfe;
- Figur 3:: Seitenansicht eines Fallschirmspringers mit Fallschirmrucksack und Anschnallhilfe, die sich in einer Schutzhülle befindet;
- Figur 4:: Vorderansicht eines Fallschirmspringers mit Fallschirmrucksack und Anschnallhilfe, die sich in einer Schutzhülle befindet;
- Figur 5:: Vorderansicht eines Fallschirmspringers mit Fallschirmrucksack, beim Herausziehen der Anschnallhilfe aus der Schutzhülle;
- Figur 6:: Vorderansicht eines Fallschirmspringers mit Fallschirmrucksack mit aus der Schutzhülle herausgezogener Anschnallhilfe;
- Figur 7:: Vorderansicht eines Fallschirmspringers mit Fallschirmrucksack mit aus der Schutzhülle herausgezogener Anschnallhilfe;
- Figur 8:: Fallschirmrucksack ohne Anschnallhilfe;
- Figur 9:: Fallschirmrucksack mit aus der Schutzhülle herausgezogener Anschnallhilfe;
- Figur 10: Fallschirmspringer beim Anschnallen im Flugzeug;
- Figur 11: Fallschirmspringer beim Anschnallen im Flugzeug; und
- Figur 12: mittels der erfindungsgemäßen Anschnallhilfe angeschnallten Fallschirmspringer in einem Flugzeug.

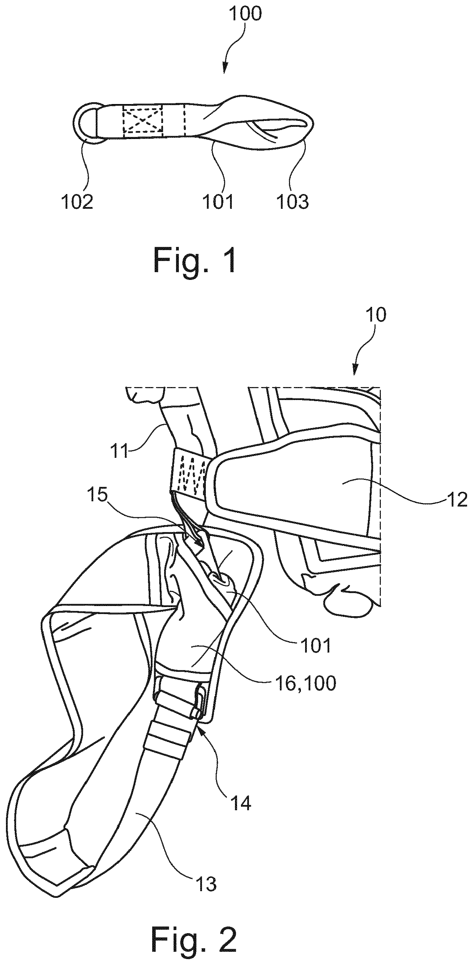

**Figur 1** zeigt eine erfindungsgemäße Anschnallhilfe 100, die als separates Bauteil ausgebildet ist. Die Anschnallhilfe 100 weist als Verbindungselement 102 einen Metallring auf. Mit dem Metallring 102 ist die Anschnallhilfe 100 mit dem Anschlussgurt vom Boden oder von der Wand des Flugzeugs verbindbar. Die Anschnallhilfe 100 weist außerdem ein Befestigungsmittel 103 auf, hier als Schlaufe ausgebildet, mit dem die Anschnallhilfe 100 an einem Fallschirmsystem anbringbar ist. Beispielsweise ist die Anschnallhilfe 100 an dem Beingurt eines Fallschirmrucksacks befestigbar.

**Figur 2** zeigt Teile des Gurtzeugs eines Fallschirmrucksacks 10. Das in Figur 2 gezeigte Gurtzeug umfasst den Haupttragegurt 11 und den Rückenquergurt 12 sowie Beingurte 13. Der Beingurt 13 weist eine Beingurtschließe mit Beingurtschnalle 14 auf, mit deren Hilfe der Beingurt straff am Fallschirmspringer befestigt werden kann. Der Beingurt 13 ist mit Haupttragegurt 11 und dem Rückenquergurt 12 über den Ringverbinder 15 verbunden. Der hier gezeigte Beingurt 13 weist eine Schutzhülle 16 auf, in der sich die Anschnallhilfe 100 befindet. Das Anschnallhilfe 100 ist in der hier gezeigten Ausführungsform an dem Ringverbinder 15 befestigt. Dazu enthält die Anschnallhilfe 100 ein als Schlaufe ausgebildetes Verbindungsmittel (nicht gezeigt). Der Beingurtverbinder 101 der Anschnallhilfe 100 ist als Gurt ausgebildet. Anstelle des Ringverbinders 15 können die Gurte auch miteinander vernäht sein.

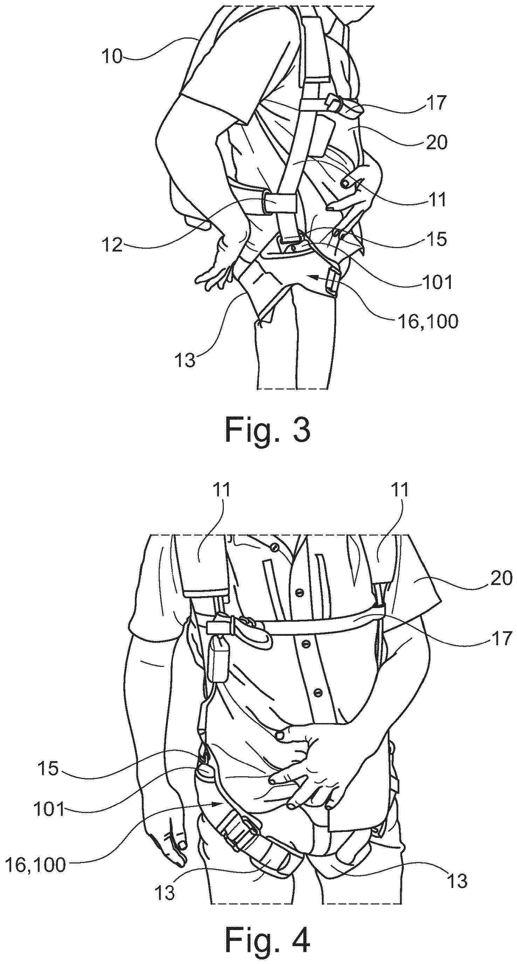

**Figur 3** zeigt einen Fallschirmspringer 20 in Seitenansicht mit einem Fallschirmrucksack 10. Zu erkennen sind der Haupttragegurt 11, der Rückenquergurt12 sowie der Beingurt 13. Die Anschnallhilfe 100 liegt verdeckt in einer Schutzhülle 16. Haupttragegurt 11 und Rückenquergurt 12 sind miteinander vernäht und mit dem Beingurt 13 durch einen Ringverbinder 15 verbunden. Die Anschnallhilfe 100 ist ebenfalls an dem Ringverbinder 15 befestigt. Dazu enthält die Anschnallhilfe 100 ein als Schlaufe ausgebildetes Verbindungsmittel (nicht gezeigt). Der Beingurtverbinder 101 der Anschnallhilfe100 ist als Gurt ausgebildet. Die Haupttragegurte 11 sind im vorderen Bereich über einen Brustgurt 17 verbunden.

**Figur 4** zeigt den Fallschirmspringer 20 gemäß Figur 3, jedoch in Vorderansicht. Zu erkennen sind der linke und der rechte Haupttragegurt 11, der rechte und der linke Beingurt 13 sowie der Ringverbinder 15, durch den der Haupttragegurt 11 und der Beingurt 13 miteinander verbunden sind und die Anschnallhilfe 100 befestigt ist. Die Anschnallhilfe 100 befindet sich in einer Schutzhülle 16. Der Beingurtverbinder 101 der Anschnallhilfe 100 ist als Gurt ausgebildet. Die Haupttragegurte 11 sind im vorderen Bereich über einen Brustgurt 17 verbunden.

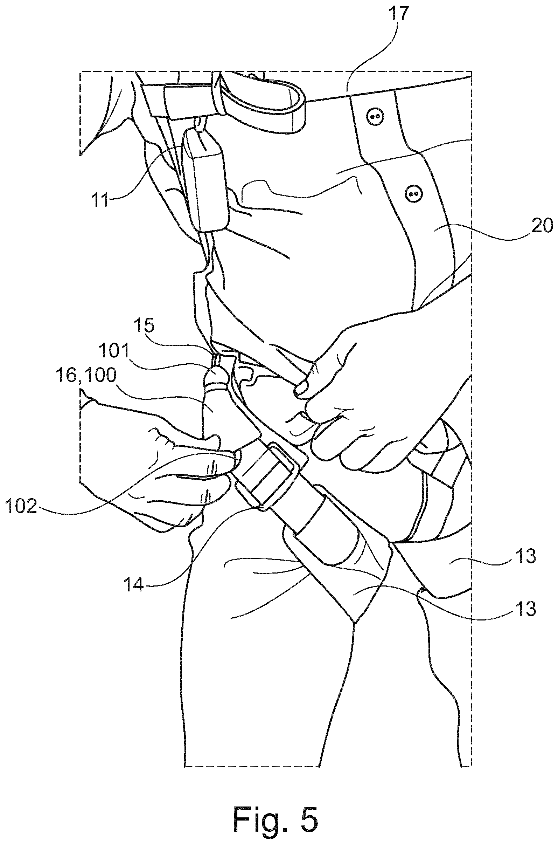

**Figur 5** zeigt den Fallschirmspringer 20 gemäß den Figuren 3 und 4 beim Herausziehen der Anschnallhilfe 100 aus der Schutzhülle 16 am rechten Beingurt 13. Zu erkennen ist das Verbindungselement 102, hier ausgebildet als Metallring. Mit dem Metallring 102 ist die Anschnallhilfe 100 mit dem Anschlussgurt 105 vom Boden oder von der Wand des Flugzeugs verbindbar. Das Anschnallhilfe 100 ist an dem Ringverbinder 15, der den Haupttragegurt 11 und den Beingurt 13 verbindet, befestigt. Dazu enthält die Anschnallhilfe 100 ein als Schlaufe ausgebildetes Verbindungsmittel (nicht gezeigt). Der Beingurtverbinder 101 der Anschnallhilfe 100 ist als Gurt ausgebildet.

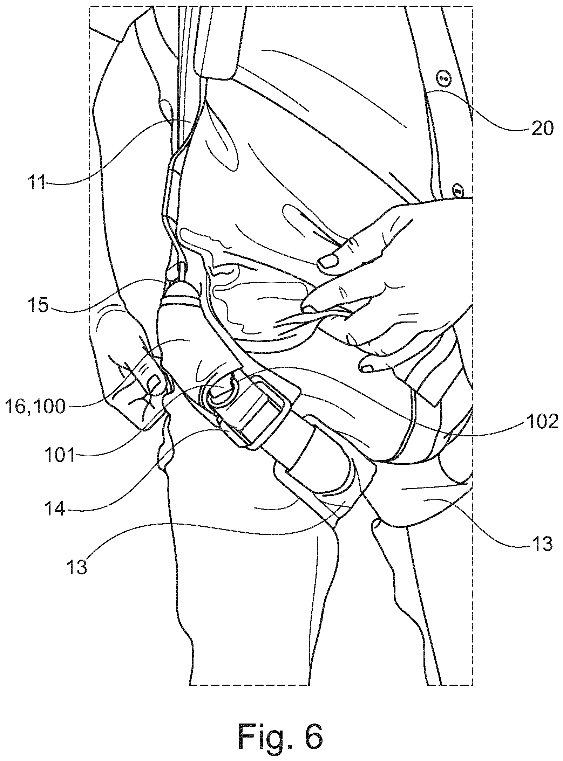

**Figur 6** zeigt den Fallschirmspringer 20 gemäß den Figuren 3, 4 und 5, wobei die Anschnallhilfe 100 wurde mit dem Ende, an dem sich das Verbindungselement 102 befindet, aus der Schutzhülle 16 herausgezogen wurde. Das Verbindungselement 102 ist in der hier gezeigten Ausführungsform als Metallring ausgebildet. Mit dem Metallring 102 ist die Anschnallhilfe 100 mit dem Anschlussgurt 105 vom Boden oder von der Wand des Flugzeugs verbindbar. Der Beingurtverbinder 101 ist als Gurt ausgebildet.

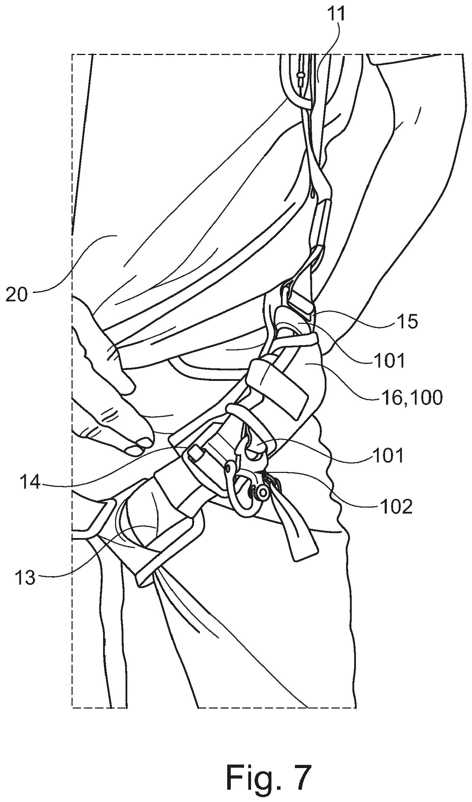

**Figur 7** zeigt einen Fallschirmspringer 20 wie in den Figuren 3 bis 6. Die Anschnallhilfe 100 befindet sich in der hier gezeigten Ausführungsform am linken Beingurt 13. Das Ende der Anschnallhilfe 100, an dem das Verbindungselement 102 angebracht ist, wurde aus der Schutzhülle 16 herausgezogen. In der hier gezeigten Ausführungsform ist das Verbindungselement 102 als Karabiner ausgebildet. Mit dem Karabiner 102 ist die Anschnallhilfe 100 mit dem Anschlussgurt 105 vom Boden oder von der Wand des Flugzeugs verbindbar. Der Beingurtverbinder 101 ist als Gurt ausgebildet.

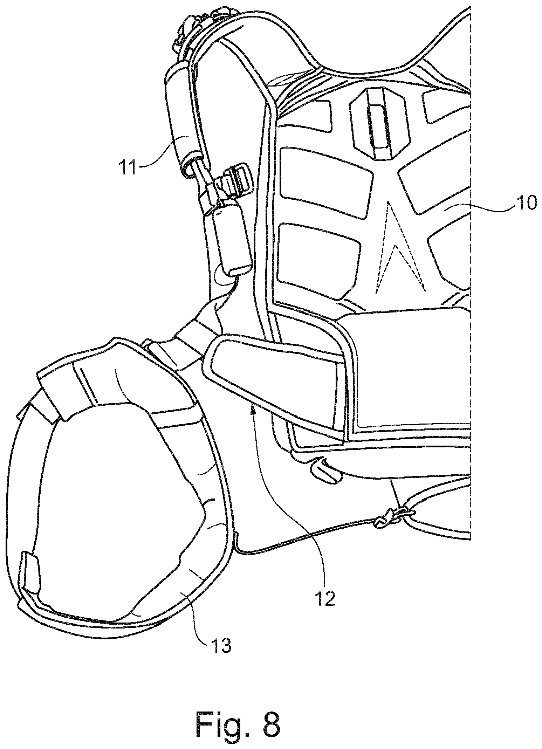

**Figur 8** zeigt einen Fallschirmrucksack 10 ohne erfindungsgemäße Anschnallhilfe. Zu erkennen sind der Haupttragegurt 11, der Rückenquergurt 12 und ein Beingurt 13. Der Haupttragegurt 11 und der Rückenquergurt 12 sind in der hier gezeigten Ausführungsform miteinander vernäht.

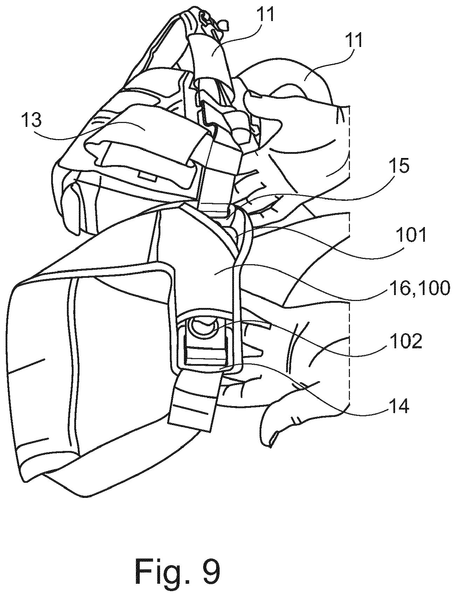

**Figur 9** zeigt einen Fallschirmrucksack 10 wie in Figur 8, jedoch mit erfindungsgemäßer Anschnallhilfe 100, die sich in einer Schutzhülle 16 befindet. Der Beingurtverbinder ist als Gurt 101 ausgebildet. Aus der Schutzhülle 16 ragt der Teil der Anschnallhilfe100 heraus, an dem sich das Verbindungsmittel 102 für das Befestigen des Fallschirmspringers an dem Anschnallgurt 105 vom Boden oder von der Wand des Flugzeugs befindet. Das Verbindungsmittel 102 ist in der hier gezeigten Ausführungsform als Metallring ausgebildet.

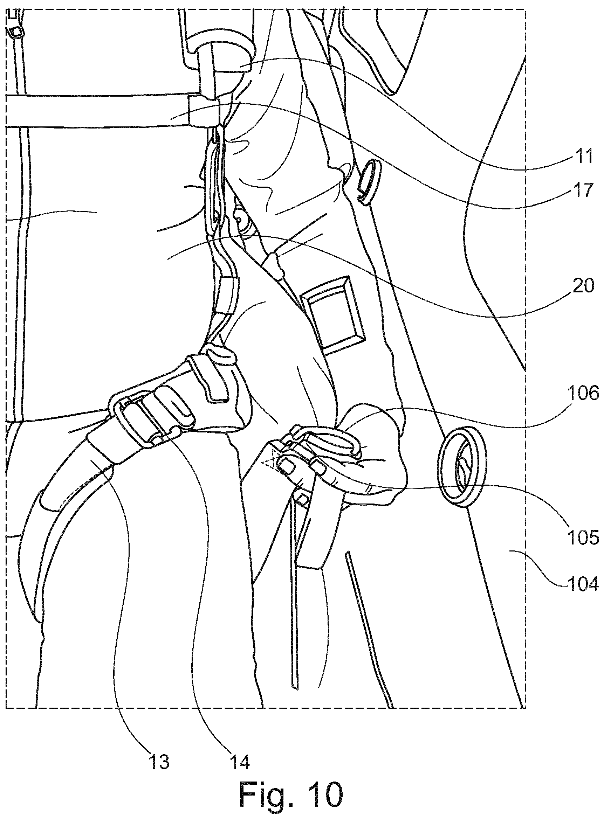

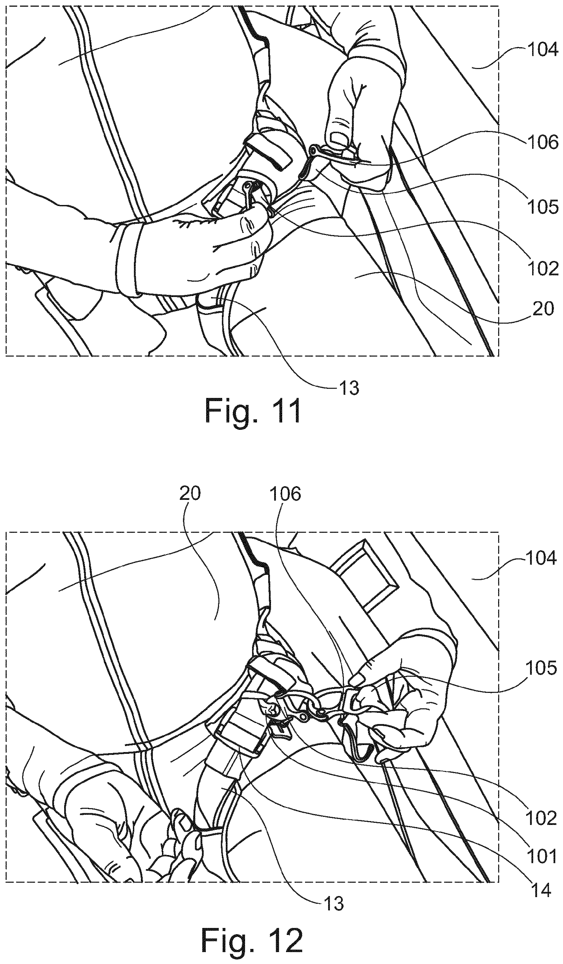

Die Figuren **10** und **11** zeigen einen Fallschirmspringer (20) in einem Flugzeug (104) bei der Heranführung eines Gurtes (105) vom Boden des Flugzeugs (104). Der Gurt (105) vom Boden des Flugzeugs (104) weist ein Verbindungsmittel (106) auf, dass als Karabiner oder Metallring ausgebildet ist und mit dem Verbindungsmittel (102) der Anschnallhilfe (100) verbunden werden soll.

Figur **12** zeigt einen Fallschirmspringer (20) in einem Flugzeug (104) angeschnallt an einem Gurtes (105) vom Boden des Flugzeugs (104) . Der Gurt (105) vom Boden des Flugzeugs (104) ist mit dem Verbindungsmittel (106), dass als Karabiner ausgebildet ist, mit dem Verbindungsmittel (102) der Anschnallhilfe (100) verbunden. Das Verbindungsmittel (102) der Anschnallhilfe (100) ist in dem hier gezeigten Beispiel ebenfalls als Karabiner ausgebildet.

### Liste der Bezugszeichen

- 10: Fallschirmsystem, Fallschirmrucksack
- 11: Haupttragegurt
- 12: Rückenquergurt
- 13: Beingurt
- 14: Beingurtschließe mit Beingurtschnalle
- 15: Ringverbinder
- 16: Schutzhülle
- 17: Brustgurt
- 20: Fallschirmspringer
- 100: Anschnallhilfe, Beingurtverbindungsstück
- 101: Beingurtverbinder, Gurt
- 102: Verbindungselement, Metallring, Karabiner
- 103: Verbindungsmittel, Schlaufe
- 104: Flugzeug
- 105: Anschnallgurt des Flugzeugs
- 106: Verbindungselement, Metallring, Karabiner des Anschnallgurts des Flugzeugs

## Patentansprüche

1. Anschnallhilfe (100) zur Sicherung eines Fallschirmspringers (20) am Boden oder der Wand eines Flugzeugs (104), **dadurch gekennzeichnet, dass** die Anschnallhilfe (100) einen Beingurtverbinder (101) und ein Verbindungselement (102) zum lösbaren Verbinden mit einem Anschnallgurt (105) am Boden oder der Wand eines Flugzeugs (104) aufweist,
wobei das Verbindungselement (102) ausgewählt ist aus
einem ringförmigen, ovalen oder eckigen Metallbügel,
oder einem Karabiner,
oder durch eine Schlaufe des Beingurtverbinders (101) gebildet wird;
und die Anschnallhilfe (100) von einer Schutzhülle (16) umgeben ist.

2. Anschnallhilfe (100) nach Anspruch 1, **dadurch gekennzeichnet, dass** der Beingurtverbinder (101) ein Gurt ist.

3. Anschnallhilfe (100) nach einem der vorherigen Ansprüche, **dadurch gekennzeichnet, dass** die Anschnallhilfe (100) fest mit dem Gurtzeug eines Fallschirmsystems (10) verbunden ist.

4. Anschnallhilfe (100) nach einem der Ansprüche 1 oder 2, **dadurch gekennzeichnet, dass** die Anschnallhilfe (100) ein Verbindungsmittel (103) aufweist, mit dem die Anschnallhilfe (100) als separates Bauteil nachträglich an einen vorhandenen Fallschirmsystem (10) anbringbar ist.

5. Fallschirmsystem (10), aufweisend eine Anschnallhilfe (100) nach einem der Ansprüche 1 bis 4.

6. Fallschirmsystem (10) nach Anspruch 5, **dadurch gekennzeichnet, dass** die Anschnallhilfe (100) fest mit dem Fallschirmsystem (10) verbunden ist.

7. Fallschirmsystem (10) nach einem der Ansprüche 5 oder 6, **dadurch gekennzeichnet, dass** die Anschnallhilfe (100) von einer Schutzhülle (16) umgeben ist.

8. Verwendung der Anschnallhilfe (100) nach einem der Ansprüche 1 bis 4 oder des Fallschirmsystems (10) nach einem der Ansprüche 5-7 zu Sicherung eines Fallschirmspringers (20) mittels eines Anschnallgurtes (105) am Boden oder der Wand eines Flugzeugs (104) während des Fluges vor dem Absprung.
